# EUROPEAN PATENT SPECIFICATION

(11) **EP 0 687 417 B1**
(45) Date of publication and mention of the grant of the patent: **02.12.1998**
(21) Application number: 94109264.5
(22) Date of filing: 16.06.1994
(51) Int. Cl.: A23B 4/12, A23P 1/04

(54) **Inhibition of bacterial growth**
Inhibition des bakteriellen Wachstums
Inhibition de la croissance bactérienne

(43) Date of publication of application: 20.12.1995
(73) Proprietor: Société des Produits Nestlé S.A., 1800 Vevey (CH)
(72) Inventor: Berggren, Maria, 254 41 Helsingborg (SV); Nocquet, Jacques, 252 71 - RAA (SV)
(74) Representative: Pate, Frederick George

(56) References cited:
- FR-A- 1 557 486
- FR-A- 2 070 001
- FR-A- 2 164 913
- US-A- 3 934 044
- US-A- 4 511 584
- US-A- 4 772 477
- JOURNAL OF FOOD SCIENCE, vol.57, no.2, 1992, CHICAGO US pages 293 - 296 SIRAGUSA ET AL. 'INHIBITION OF LISTERIA MONOCYTOGENES ON BEEF TISSUE BY APPLICATION OF ORGANIC ACIDS IMMOBILIZED IN A CALCIUM ALGINATE GEL'
- DATABASE FSTA INTERNATIONAL FOOD INFORMATION SERVICE (IFIS), FRANFURT/MAIN, DE AN:90:8314 July 1990,

## Description

The present invention relates to a process for inhibiting pathogenic bacterial growth in chilled cooked meat products.

The possible contamination by Listeria Monocytogenes of pre-packed chilled cooked products is a big problem for the charcuterie industry. In general the product formulations make them a favourable medium for Listeria growth and the storage temperature during shelf-life is not always low enough to retard significantly the growth rate.

It is known that the addition of acetic acid in a sausage batter can limit or prevent the growth of Listeria (ND-TR920018). The action of this specific organic acid is believed to be due to the fall of pH of the medium in combination with the presence of undissociated acid molecules in the product.

As for organoleptic reasons it is usually not possible to decrease too much the pH of the product (a standard cooked charcuterie product has a pH value between 6.0 and 6.5), the acceptable "low pH" of a cooked charcuterie product is minimum 5.7. For the same order of pH, the growth-inhibition effect is not seen with other organic acids such as lactic or citric acids. However a mix of acetic acid and citric acid (ratio 50/50) shows efficiency.

The main problem when using this technology is that it is possible to add the acetic acid only before cooking.

The addition of acid in the meat or meat batter formulation will lead to a pH drop which has a negative influence on the cooking yield and the qualities of the product. Meat and meat batters processed and cooked with low pH raw materials are well known for having a poor texture (defect of the slice binding, soft and mushy texture for cooked ham, fat separation for sausage), too pale colour, drip in the pack and a poor processing yield.

As previous trials showed us that acetic acid was the most suitable ingredient for our purpose, the idea of the described process was to find a means to have free acetic acid active in the finished product (thus when it is needed) without disturbing the meat behaviour prior and during cooking.

Acetic acid is not needed before cooking because all possible contamination will be annhihilated during the cooking process. The dangerous contamination occurs during the handling after cooking, the portioning and the packaging processes.

The use of acetic acid immobilised in a calcium alginate gel is described in the following publications:
**a)** -"inhibition of listeria monocytogenes on beef tissue by application of organic acids immobilized in a calcium alginate gel"
   Gregory S.Siragusa and James S.Dickson
   Journal of Food Science volume 57, No 2, 1992
**b)** -"inhibition of listeria monocytogenes, salmonella typhimurium and escherichia coli 0157:H7 on beef muscle tissue by lactic or acetic acid contained in calcium alginate gels"
   Gregory R.Siragusa and James S.Dickson
   Journal of Food Safety 13 (1993) 147-158

However, immobilisation of the acetic acid means that it is evenly distributed through a gel matrix and it remains permanently in contact with the meat.

US-A-3934044 relates to a process of treating meat by contacting all surfaces of the meat with a hot aqueous solution of acetic acid.

Database FSTA, Abstract Nr.90:8314 describes the effect of various acidulants on the growth of Listeria monocytogenes in brain heart infusion broth.

US-A-4772477 describes an acidulant for lowering the pH of a moist comminuted meat product to a pH level below about 5.2, the acidulant being encapsulated with a coating consisting of at least one water-soluble glyceride and at least one hydrogenated vegetable oil.

FR-A-2071001 describes a process for the prevention of spoilage of foodstuffs using powdered sorbic acid, potassium sorbate, calcium propionate or sodium propionate in conjunction with pH-lowering agents such as fumaric, tartaric, malic acid, etc. coated with a hardened oil.

US-A-4511584 describes a particulate food acidulant consisting essentially of lactic acid plated onto particulate calcium lactate carrier encapsulated by a hard, edible lipid coating.

In the present invention, the aim is to prevent as much as possible any contact between the acid and the meat until a specific time (during or after cooking the meat) and we have found that by encapsulating the acetic acid within a fat having a sufficiently high melting point, the acetic acid may be retained within the capsule during cooking and released from the capsule in the cooked product. In any case, since calcium alginate gels are heat stable they will not melt during cooking and are therefore unsuitable for the present invention

According to the present invention there is provided a process for inhibiting pathogenic bacterial growth in chilled cooked meat products having a pH of at least 5.7 which comprises mixing an encapsulated product in particulate form comprising capsules containing acetic acid within an edible lipid with the meat product formulation before cooking.

If desired, mixtures of acetic acid and citric acid may be used where the maximum quantity of citric acid is 60% by weight based on the weight of the mixture.

The ratio of acid to edible lipid in the capsule may suitably be from 40:100 to 80:100 and preferably from 50:100 to 70:100.

The amount of acid added to the product formulation may be from 0.01 to 1.0%, preferably from 0.025 to 0.5% and more preferably from 0.05 to 0.3% by weight based on the total weight.

The capsules may have an average diameter of from 1 to 5000 micrometres, preferably from 100 to 3000 micrometres and especially from 250 to 2000 micrometres.

The lipid should be solid at room temperature and have a melting point below the maximum cooking temperature of the meat product. The lipid should not react with meat formulation.

The melting point of the lipid depends on the cooking temperature of the meat formulation and is not usually more than 100°C, e.g. for sausage and ham type products the lipid may have a melting point of from 55° to 70°C, preferably from 60° to 65°C and for bacon type products the lipid may have a melting point of from 40°to 55°C, preferably from 45° to 50°C. The choice of melting point means that the acid release during the steps prior to cooking is limited to the steps involving mechanical stress on the lipid capsule, e.g. emulsification during sausage manufacture. Normally, the amount of acid release prior to cooking is from 0 to 10% depending on the process used.

The lipid may be a food grade hydrogenated or partially hydrogenated vegetable or animal fat. Examples of lipids are palm oil, sunflower oil, safflower oil, peanut oil, corn oil or a mixture of partially hydrogenated soy and cotton seed oils having a melting point of 60°to 63°C.

The acid may be encapsulated within the edible lipid by any conventional encapsulation process such as spray drying, spray chilling, coacervation, extrusion, inclusion complexation and co-crystallisation.

Since acetic acid is a liquid, it is preferably fixed on a solid substrate before encapsulation. Examples of suitable substrates are sugars, sodium acetate, salt, a solid organic acid or any mixture thereof.

The encapsulated product may be mixed with the product formulation by any conventional method, for example, by tumbling or vacuum tumbling, or by injection in the case of large meat pieces. We have found that tumbling enables an acceptable distribution of the acid in the cooked product for product formulations in emulsified form as well as where pieces are used having a maximum volume of about 30cm3. For product formulations containing meat pieces having a volume greater than about 30cm3, an acceptable distribution of the acid may be achieved by injection. Since the encapsulated product is not soluble, it may be necessary to use an injector equipped with needles whose apertures have a diameter superior to 1mm.

The process of the present invention may be used for any kind of chilled cooked meat product where the meat may be , for example, beef, pork, tongue, lamb, veal, game, poultry such as chicken, turkey and duck, or fish such as smoked salmon made by hot smoking. The process is especially suitable for cured or marinated products made from pork, beef, poultry or game, or any blend of such meats.

The process of the present invention inhibits or prevents the growth of Listeria Monocytogenes as well as other potential pathogenic bacteria such as Enterobacteriaceae, Streptococcus fecalis and Brochothrix thermosphacta during storage of the chilled cooked product. There are no negative effects on processing yield(cooking and portioning yield) or on the finished quality(binding, drip in the pack, texture and taste.

The present invention will now be further described by way of the following examples. Percentages are given by weight. The encapsulate is a commercially available product called "Essicum" containing 36% acetic acid, 34% citric acid and 30% lactose manufactured by Jungbunzlauer, an Austrian Company. The lipid is a mixture of partially hydrogenated soy and cotton seed oils having a melting point of 60-63°C.

### EXAMPLE 1

This Example describes the preparation of a cooked ham.

Fresh hams having pH 5.7 were cut and trimmed. The meat was then minced through a 20 mm plate and loader in a SCHEID 100 litres vacuum tumbler. At this step, brine solution (see Table 1) in an amount of 115.6 g/kg meat was added. Then the meat was tumbled under vacuum for 5 hours at 0°C using interval program.

**TABLE 1**

| | |
|---|---|
| Curing salt (0,6% nitrite) | 11,50% |
| Salt | 5,00% |
| Dextrose | 11,50% |
| Sodium tripolyphosphate | 1,50% |
| Sodium ascorbate | 0,20% |
| Spices | 1,30% |
| Water | 69,00% |
| TOTAL | 100,00% |

After 5 hours tumbling, the encapsulated acetic acid (60% encapsulate, 40% lipid) was added in an amount of 7.5 g/kg of meat and brine. Then the meat was tumbled under vacuum for a further hour.

The tumbled meat was then stuffed in an impermeable casing using a Handtman vacuum filler and cooked in a steam cabinet as follows.
**1)** 62°C chamber temperature to 55°C core temperature
**2)** 76°C chamber temperature to 72°C core temperature

The hams were cooled with water shower for 30 min then placed in a cooler at 2°C for 20 hours.

Then the casings were removed and the ham sliced and gas-packed.

The cooking yield (100%) and the slicing yield of the product were the same as for a reference ham processed in parallel following the same process but without the addition of encapsulated acetic acid.

The pH of the ham after cooking and chilling was 5.85 compared with the pH of the reference sample (no acetic acid) which was 6.15.

No significant difference could be detected between the reference and the trial regarding the amount of drip in the packaging.

No significant difference could be detected between the reference and the trial (triangular test) regarding the flavour and the texture.

The ham packages were then inoculated with 3 log CFU Listeria Monocytogenes/g product and stored at 8°C for 5 weeks.

The evolution of the Listeria development as well as other spoilage and pathogenic bacteria were checked every week.

At the end of the shelf-life Listeria Monocytogenes had increased in the reference samples from 3 log CFU to 8 log CFU while the level of the treated samples remained at 3 log CFU.

Challenge trials performed on other potential pathogenic bacteria (Enterobacteriaceae, Streptococcus fecalis, Brochothrix thermophacta) showed that their growth were also inhibited or annhilated.

### EXAMPLE 2

### Frankfurter sausage preparation

A sausage batter was produced following standard manufacturing practice:
- Grinding of the lean meat and fat
- Presalting of the lean meat
- Mixing of the presalted meat with the fat, the binder and the spices
The recipe of the sausage batter is given in Table 2.

**TABLE 2**

| | |
|---|---|
| Pork lean meat | 40,00% |
| Pork backfat | 33,00% |
| Frozen blood plasma (7% protein) | 12,00% |
| Curing salt (0,6% nitrit) | 1,80% |
| Salt | 0,30% |
| Sodium caseinate | 1,00% |
| Sodium tripolyphosphate | 0,20% |
| Spices | 1,67% |
| Sodium ascorbate | 0,03% |
| Water/ice | 10,00% |
| TOTAL | 100,00% |

At the end of the mixing step, 0,3% of encapsulated acetic acid (50% encapsulate, 50% lipid) was added to the batter.

The mix was then passed through an emulsifier and stuffed in cellulosic casing (diameter 18 mm) using an automatic stuffing/linking machine (Frankamatic from Townsen). "Frankamatic" is a Trade Mark.

The sausages were then smoked and cooked up to 72°C core temperature.

The sausages were then chilled with a water shower and placed in a cooler at 2°C until their temperature falls below 5°C.

The casing was then removed and the sausages packed under vacuum.

The cooking yield (91%) was the same for this product as for the reference product processed in parallel following the same process but without the addition of encapsulated acetic acid.

The pH of the sausage after cooking and chilling was 5.8 compared with the pH of the reference sample (no acetic acid) which was 6.1.

No significant difference could be detected between the reference and the trial regarding the amount of drip in the packaging.

No significant difference could be detected between the reference and the trial (triangular test 30 people) regarding the flavour and the texture.

The sausage packages were then inoculated with 3 log CFU Listeria Monocytogenes/g product and stored at 8 and 12°C for 4 weeks.

The evolution of the Listeria development as well as other spoilage and pathogen bacteria were checked every week.

At the end of the shelf-life Listeria Monocytogenes had increased in the reference sample from 3 log CFU to 8 log CFU while the level of the treated samples remained at 3 log CFU.

## Claims

1. A process for inhibiting pathogenic bacterial growth in chilled cooked meat products having a pH of at least 5.7 which comprises mixing an encapsulated product in particulate form comprising capsules containing acetic acid within an edible lipid with the meat product formulation before cooking.

2. A process according to claim 1 wherein mixtures of acetic acid and citric acid are used where the maximum quantity of citric acid is 60% by weight based on the weight of the mixture.

3. A process according to claim 1 wherein the ratio of acid to edible lipid in the capsule is from 40:100 to 80:100.

4. A process according to claim 1 wherein the amount of acid added to the product formulation is from 0.01 to 1.0%.

5. A process according to claim 1 wherein the capsules have an average diameter of from 1 to 5000 micrometres.

6. A process according to claim 1 wherein for sausage and ham type products the lipid has a melting point of from 55° to 70°C.

7. A process according to claim 1 wherein for bacon type products the lipid has a melting point of from 40°to 55°C.

8. A process according to claim 1 wherein the lipid consists of partially hydrogenated soy and cotton seed oils having a melting point of 60°to 63°C.

9. A process according to claim 1 wherein the acid is fixed on a solid substrate before encapsulation.

10. A process according to claim 9 wherein the solid substrate is a sugar, sodium acetate, salt, a solid organic acid or any mixture thereof.

## Patentansprüche

1. Verfahren zum Inhibieren des Wachstums pathogener Bakterien in gekühlten Produkten aus gekochtem Fleisch mit einem pH von wenigstens 5,7, bei dem man ein verkapseltes Produkt in Teilchenform, das Kapseln, die Essigsäure in einem eßbaren Lipid enthalten, umfaßt, mit der Fleischprodukt-Formulierung vor dem Kochen vermischt.

2. Verfahren nach Anspruch 1, bei dem Mischungen aus Essigsäure und Zitronensäure verwendet werden, wobei die maximale Menge der Zitronensäure 60 Gew.-%, bezogen auf das Gewicht der Mischung, beträgt.

3. Verfahren nach Anspruch 1, bei dem das Verhältnis der Säure zu dem eßbaren Lipid in der Kapsel etwa 40:100 bis 80:100 beträgt.

4. Verfahren nach Anspruch 1, bei dem die Menge der der Produktformulierung zugesetzten Säure von 0,01 bis 1,0 % beträgt.

5. Verfahren nach Anspruch 1, bei dem die Kapseln einen mittleren Durchmesser von 1 bis 5000 µm aufweisen.

6. Vefahren nach Anspruch 1, bei dem für Produkte vom Wurst- und Schinkentyp das Lipid einen Schmelzpunkt von 55-70°C aufweist.

7. Verfahren nach Anspruch 1, bei dem für Produkte vom Specktyp das Lipid einen Schmelzpunkt von 40-55°C aufweist.

8. Verfahren nach Anspruch 1, bei dem das Lipid aus teilweise hydrierten Soja- und Baumwollsaatölen mit einem Schmelzpunkt von 60 bis 63°C besteht.

9. Verfahren nach Anspruch 1, bei dem die Säure vor dem Verkapseln auf einem festen Substrat fixiert wird.

10. Verfahren nach Anspruch 1, bei dem das feste Substrat ein Zucker, Natriumacetat, Salz, eine feste organische Säure oder irgendeine Mischung davon ist.

## Revendications

1. Procédé pour inhiber la croissance de bactéries pathogènes dans des produits consistant en viandes cuites réfrigérées, ayant un pH d'au moins 5,7, qui comprend le mélange d'un produit encapsulé sous forme de particules comprenant des capsules contenant de l'acide acétique entouré d'un lipide comestible avec la formulation de produit à base de viande avant cuisson.

2. Procédé suivant la revendication 1, dans lequel sont utilisés des mélanges d'acide acétique et d'acide citrique dans lesquels la quantité maximale d'acide citrique est égale à 60 % en poids sur la base du poids du mélange.

3. Procédé suivant la revendication 1, dans lequel le rapport de l'acide au lipide comestible dans la capsule est compris dans l'intervalle de 40:100 à 80:100.

4. Procédé suivant la revendication 1, dans lequel la quantité d'acide ajoutée à la formulation de produit est comprise dans l'intervalle de 0,01 à 1,0 %.

5. Procédé suivant la revendication 1, dans lequel les capsules ont un diamètre moyen de 1 à 5 000 micromètres.

6. Procédé suivant la revendication 1, dans lequel, pour des produits du type des saucisses et du jambon, le lipide a un point de fusion de 55 °C à 70 °C.

7. Procédé suivant la revendication 1, dans lequel, pour des produits du type du bacon, le lipide a un point de fusion de 40 °C à 55 °C.

8. Procédé suivant la revendication 1, dans lequel le lipide consiste en huile de soja et huile de graines de cotonnier partiellement hydrogénées ayant un point de fusion de 60 °C à 63 °C.

9. Procédé suivant la revendication 1, dans lequel l'acide est fixé sur un substrat solide avant encapsulation.

10. Procédé suivant la revendication 9, dans lequel le substrat solide consiste en un sucre, l'acétate de sodium, le sel, un acide organique solide ou n'importe lequel de leurs mélanges.
